(19) Europäisches Patentamt / European Patent Office / Office européen des brevets

(11) **EP 4 614 911 A1**

(12) **EUROPEAN PATENT APPLICATION**
published in accordance with Art. 153(4) EPC

(43) Date of publication:
**10.09.2025 Bulletin 2025/37**

(21) Application number: **22966103.8**

(22) Date of filing: **22.11.2022**

(51) International Patent Classification (IPC):
**H04L 27/00** (2006.01)

(52) Cooperative Patent Classification (CPC):
**H04L 27/00**

(86) International application number:
**PCT/CN2022/133574**

(87) International publication number:
**WO 2024/108404 (30.05.2024 Gazette 2024/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: Huawei Technologies Co., Ltd.
Shenzhen, Guangdong 518129 (CN)

(72) Inventors:
• HE, Gaoning
  Shenzhen, Guangdong 518129 (CN)
• YANG, Ganghua
  Shenzhen, Guangdong 518129 (CN)

(74) Representative: Epping - Hermann - Fischer
Patentanwaltsgesellschaft mbH
Schloßschmidstraße 5
80639 München (DE)

(54) **FRAME ERROR RATE MEASUREMENT METHOD AND APPARATUS**

(57)     A method and an apparatus for measuring a frame error rate, reducing duration of measuring the frame error rate. A first device obtains an error frame, obtains channel information and/or interference information corresponding to the error frame, and determines a frame error rate based on the channel information and/or the interference information corresponding to the error frame. The method for determining the frame error rate based on the channel information and/or the interference information corresponding to the error frame can reduce a quantity of transmitted test frames. For example, a total quantity of frames needs to be only 1% or even less of a total quantity of frames required for a current MC method. In other words, a quantity of test frames used for obtaining an accurate frame error rate needs to be only 1% or even less of the total quantity of frames required for the current MC method. Therefore, the measurement duration can be reduced, and measurement efficiency can be improved.

301: A first device obtains an error frame

302: The first device obtains channel information and/or interference information corresponding to the error frame

303: The first device determines a frame error rate based on the channel information and/or the interference information corresponding to the error frame

FIG. 3

**Description**

TECHNICAL FIELD

This application relates to the field of communication technologies, and in particular, to a method and an apparatus for measuring a frame error rate.

BACKGROUND

In a performance test of a communication device, receiver performance is an important technical indicator for measuring device performance, and is generally expressed by measuring a frame error rate (frame error rate, FER). The frame error rate refers to an average probability that information frames are transmitted incorrectly during data transmission.

For conventional 2G/3G/4G mobile broadband (mobile broadband, MBB) services, the frame error rate is generally required to be in an order of magnitude of FER=$10^{-1}$ to $10^{-2}$. Measurement of the frame error rate in this order of magnitude can be completed in short time. However, with emergence of a scenario that has a high latency requirement, for example, emergence of a 5G ultra-reliable low-latency communication (ultra-reliable low-latency communication, URLLC) scenario, a higher requirement is imposed on a frame error rate indicator (for example, FER=$10^{-6}$ to $10^{-8}$). This poses a greater challenge to measurement of a frame error rate of the device, which not only leads to long measurement time, but may even make the measurement impossible to complete in limited time. In addition, a currently used method for measuring a frame error rate is usually a Monte Carlo (monte carlo, MC) method, in which measurement time is long. This cannot satisfy the requirement of the scenario that has the high latency requirement.

SUMMARY

This application provides a method and an apparatus for measuring a frame error rate, to reduce duration of measuring the frame error rate.

According to a first aspect, this application provides a method for measuring a frame error rate. The method may be applied to a first device, a function module in the first device, a processor or a chip in the first device, or the like. The method applied to the first device is used as an example. The method may include: The first device obtains an error frame, obtains channel information and/or interference information corresponding to the error frame, and determines a frame error rate based on the channel information and/or the interference information corresponding to the error frame.

According to the foregoing method, the method for determining the frame error rate based on the channel information and/or the interference information corresponding to the error frame can reduce a quantity of transmitted test frames. For example, a total quantity of frames needs to be only 1% or even less of a total quantity of frames required for a current MC method. In other words, a quantity of test frames used for obtaining an accurate frame error rate needs to be only 1% or even less of the total quantity of frames required for the current MC method. Therefore, measurement duration can be reduced, and measurement efficiency can be improved.

In a possible design, that the first device obtains channel information and/or interference information corresponding to the error frame may be that the first device determines the channel information and/or the interference information corresponding to the error frame from channel information and/or interference information corresponding to all frames generated by the first device; the first device receives channel information and/or interference information corresponding to all frames from a second device, and determines the channel information and/or the interference information corresponding to the error frame from the channel information and/or the interference information corresponding to all the frames; or the first device sends a frame identifier of the error frame to a second device, where the frame identifier of the error frame is used for determining the channel information and/or the interference information corresponding to the error frame, and the first device receives the channel information and/or the interference information corresponding to the error frame from the second device. In this way, the first device can accurately obtain the channel information and/or the interference information corresponding to the error frame, and further can accurately determine the frame error rate based on the channel information and/or the interference information corresponding to the error frame.

In a possible design, that the first device receives channel information and/or interference information corresponding to all frames from a second device may be that the first device may receive the channel information corresponding to all the frames from the second device through a first interface, and/or receive the interference information corresponding to all the frames from the second device through a second interface. In this way, the first device can accurately receive the channel information and/or the interference information corresponding to all the frames through the corresponding interface, to accurately obtain the channel information and/or the interference information corresponding to the error frame.

In a possible design, that the first device sends a frame identifier of the error frame to a second device may be that the first device may send the frame identifier of the error frame to the second device through a third interface; and that the first device receives the channel information and/or the interference information corresponding to the error frame from the second device may be that the first device may receive the channel information corresponding to the error frame from the second device through a fourth interface, and/or receive the interference information corresponding to the error frame from the second device through a fifth interface. In this way, the first device can accurately obtain the channel information and/or the interference information corresponding to the error frame.

In a possible design, when the first device receives the channel information and/or the interference information corresponding to all the frames from the second device, the first device may further receive frame identifiers corresponding to all the frames from the second device, where a frame identifier of each frame corresponds to channel information and/or interference information of each frame; or when the first device receives the channel information and/or the interference information corresponding to the error frame from the second device, the first device may further receive the frame identifier of the error frame from the second device, where a frame identifier of each error frame corresponds to channel information and/or interference information of each error frame. In this way, the first device can accurately identify a correspondence between the frame and the channel information and/or the interference information of the frame.

In a possible design, the first device may determine a plurality of pieces of channel information and/or a plurality of pieces of interference information. In this way, an analog channel can satisfy a channel requirement.

In a possible design, the first device sends the plurality of pieces of channel information and/or the plurality of pieces of interference information to the second device, so that the second device provides the channel information and/or the interference information for a communication link between a sending device and a receiving device.

In a possible design, that the first device determines the frame error rate based on the channel information and/or the interference information corresponding to the error frame may be that the first device determines a weight of the error frame based on the channel information and/or the interference information corresponding to the error frame, and determines the frame error rate based on the weight of the error frame. In this way, the quantity of test frames in a process of measuring the frame error rate can be reduced, and the measurement efficiency can be improved. In a possible design, the frame error rate may satisfy the following formula:

$$FER = \sum_{i=1}^{N} I_i w_i$$

$FER$ is the frame error rate; $N$ is a quantity of frames, and $N$ is a positive integer; $I$ is an error indication function, and when an $i^{th}$ frame is an error frame, $I_i$ is 1, or otherwise, $I_i$ is 0; and $w_i$ is a weight of the $i^{th}$ frame, and $w_i$ is determined based on channel information and/or interference information corresponding to the $i^{th}$ frame.

In a possible design, that the first device obtains an error frame may be that the first device determines a plurality of test frames, obtains a plurality of decoded frames, and determines the error frame based on the plurality of test frames and the plurality of decoded frames. In this way, the first device can accurately obtain the error frame, so that the frame error rate is measured based on the channel information and/or the interference information of the error frame.

According to a second aspect, this application provides a method for measuring a frame error rate. The method may be applied to a second device, a function module in the second device, a processor or a chip in the second device, or the like. The method applied to the second device is used as an example. The method may include: The second device determines channel information and/or interference information corresponding to all frames, and sends the channel information and/or the interference information corresponding to all the frames to a first device. Based on this, the first device may determine, based on the channel information and/or the interference information corresponding to all the frames, channel information and/or interference information corresponding to an error frame, to determine the frame error rate based on the channel information and/or the interference information corresponding to the error frame.

In a possible design, that the second device sends the channel information and/or the interference information corresponding to all the frames to a first device may be that the second device may send the channel information corresponding to all the frames to the first device through a first interface, and/or send the interference information corresponding to all the frames to the first device through a second interface. In this way, the first device can accurately receive the channel information and/or the interference information corresponding to all the frames through the corresponding interface, to accurately obtain the channel information and/or the interference information corresponding to the error frame.

In a possible design, when the second device sends the channel information and/or the interference information corresponding to all the frames to the first device, the second device may further send frame identifiers corresponding to all the frames to the first device, where a frame identifier of each frame corresponds to channel information and/or interference information of each frame. In this way, the first device can accurately identify a correspondence between the frame and the channel information and/or the interference information of the frame.

According to a third aspect, this application provides a method for measuring a frame error rate. The method may be applied to a second device, a function module in the second device, a processor or a chip in the second device, or the like. The method applied to the second device is used as an example. The method may include: The second device receives a frame identifier of an error frame from a first device, where the frame identifier of the error frame is used for determining channel information and/or interference information corresponding to the error frame; and further, the second device determines, based on the frame identifier of the error frame, the channel information and/or the interference information corresponding to the error frame, and sends the channel information and/or the interference information corresponding to the error frame to the first device. Based on this, the first device can obtain the channel information and/or the interference information corresponding to the error frame, and further can determine the frame error rate based on the channel information and/or the interference information corresponding to the error frame. In a possible design, that the second device receives a frame identifier of an error frame from a first device may be that the second device receives the frame identifier of the error frame from the first device through a third interface.

In a possible design, that the second device sends the channel information and/or the interference information corresponding to the error frame to the first device may be that the second device sends the channel information corresponding to the error frame to the first device through a fourth interface, and/or sends the interference information corresponding to the error frame to the first device through a fifth interface. In this way, the first device can accurately receive the channel information and/or the interference information corresponding to the error frame through the corresponding interface.

In a possible design, when the second device sends the channel information and/or the interference information corresponding to the error frame to the first device, the second device may further send the frame identifier of the error frame to the first device, where a frame identifier of each error frame corresponds to channel information and/or interference information of each error frame. In this way, the first device can accurately identify a correspondence between the error frame and the channel information and/or the interference information of the error frame.

According to a fourth aspect, this application further provides an apparatus for measuring a frame error rate. The apparatus for measuring a frame error rate may be a first device, and the apparatus for measuring a frame error rate has a function of implementing the method in the first aspect or the possible design examples of the first aspect. The function may be implemented by hardware, or may be implemented by hardware executing corresponding software. The hardware or the software includes one or more modules corresponding to the foregoing function.

In a possible design, a structure of the apparatus for measuring a frame error rate includes a storage unit and a processing unit. These units may perform corresponding functions in the first aspect or the possible design examples of the first aspect. For details, refer to detailed descriptions in the method examples. Details are not described herein again.

In a possible design, the structure of the apparatus for measuring a frame error rate includes a communication interface and a processor, and optionally further includes a memory. The communication interface is configured to receive and send information or data, and is configured to communicate and interact with another device in a system. The processor is configured to support the apparatus for measuring a frame error rate in performing the corresponding functions in the first aspect or the possible design examples of the first aspect. The memory is coupled to the processor, and stores program instructions and data that are necessary for the apparatus for measuring a frame error rate.

According to a fifth aspect, this application further provides an apparatus for measuring a frame error rate. The apparatus for measuring a frame error rate may be a second device, and the apparatus for measuring a frame error rate has a function of implementing the method in the second aspect or the possible design examples of the second aspect, or the method in the third aspect or the possible design examples of the third aspect. The function may be implemented by hardware, or may be implemented by hardware executing corresponding software. The hardware or the software includes one or more modules corresponding to the foregoing function.

In a possible design, a structure of the apparatus for measuring a frame error rate includes a communication unit and a processing unit. These units may perform corresponding functions in the second aspect or the possible design examples of the second aspect, or the third aspect or the possible design examples of the third aspect. For details, refer to detailed descriptions in the method examples. Details are not described herein again.

In a possible design, the structure of the apparatus for measuring a frame error rate includes a communication interface and a processor, and optionally further includes a memory. The communication interface is configured to receive and send information or data, and is configured to communicate and interact with another device in a system. The processor is configured to support the apparatus for measuring a frame error rate in performing the corresponding functions in the second aspect or the possible design examples of the second aspect, or the third aspect or the possible design examples of the third aspect. The memory is coupled to the processor, and stores program instructions and data that are necessary for the apparatus for measuring a frame error rate.

According to a sixth aspect, an embodiment of this application provides a system. The system may include the first device mentioned above, or may include the first device and the second device mentioned above.

According to a seventh aspect, an embodiment of this application provides a computer-readable storage medium. The computer-readable storage medium stores program instructions, and when the program instructions are run on a computer, the computer is enabled to perform the method in any one of the first aspect and the possible designs of the first aspect, any one of the second aspect and the possible designs of the second aspect, or any one of the third aspect and the possible designs of the third aspect in embodiments of this application. For example, the computer-readable storage medium may be any usable medium that can be accessed by the computer. By way of example but not limitation, the computer-readable medium may include a non-transitory computer-readable medium, a random access memory (random access memory, RAM), a read-only memory (read-only memory, ROM), an electrically erasable programmable read-only memory (electrically EPROM, EEPROM), a CD-ROM or another optical disk storage, a magnetic disk storage medium or another magnetic storage device, or any other medium that can carry or store desired program code in a form of instructions or a data structure and that can be accessed by the computer.

According to an eighth aspect, an embodiment of this application provides a computer program product including computer program code or instructions. When the computer program product runs on a computer, the computer is enabled to implement the method in any one of the first aspect and the possible designs of the first aspect, any one of the second aspect and the possible designs of the second aspect, or any one of the third aspect and the possible designs of the third aspect. According to a ninth aspect, this application further provides a chip, including a processor. The processor is coupled to a memory, and is configured to read and execute program instructions stored in the memory, to enable the chip to implement the method in any one of the first aspect and the possible designs of the first aspect, any one of the second aspect and the possible designs of the second aspect, or any one of the third aspect and the possible designs of the third aspect.

For each aspect of the fourth aspect to the ninth aspect and technical effects that may be achieved by each aspect, refer to the descriptions of the technical effects that can be achieved by the first aspect or the possible solutions of the first aspect, the second aspect or the possible solutions of the second aspect, or the third aspect or the possible solutions of the third aspect. Details are not described herein again.

BRIEF DESCRIPTION OF DRAWINGS

FIG. 1 is a diagram of a scenario of measuring a frame error rate according to this application;
FIG. 2 is a diagram of a communication link between a sending device and a receiving device according to this application;
FIG. 3 is a flowchart of a method for measuring a frame error rate according to this application;
FIG. 4 is a diagram of another scenario of measuring a frame error rate according to this application;
FIG. 5 is a diagram of another scenario of measuring a frame error rate according to this application;
FIG. 6 is a diagram of another scenario of measuring a frame error rate according to this application;
FIG. 7 is a flowchart of an example of a method for measuring a frame error rate according to this application;
FIG. 8 is a flowchart of an example of another method for measuring a frame error rate according to this application;
FIG. 9 is a diagram of a structure of an apparatus for measuring a frame error rate according to this application;
FIG. 10 is a diagram of a structure of another apparatus for measuring a frame error rate according to this application; and
FIG. 11 is a diagram of a structure of an apparatus for measuring a frame error rate according to this application.

DESCRIPTION OF EMBODIMENTS

Embodiments of this application provide a method and an apparatus for measuring a frame error rate, to reduce duration of measuring the frame error rate. The method and the apparatus in this application are based on a same technical concept. Because problem-resolving principles of the method and the apparatus are similar, mutual reference may be made to implementation of the apparatus and the method, and repeated parts are not described.

In the descriptions of this application, words such as "first" and "second" are merely used for distinguishing between descriptions, and cannot be understood as an indication or implication of relative importance, or cannot be understood as an indication of implication of an order.

In the descriptions of this application, "at least one (type)" means one or more (types), and "a plurality of (types)" means two or more (types). "At least one of the following" or a similar expression thereof means any combination of these items, including any combination of a single item or a plurality of items. For example, at least one of a, b, or c may indicate a, b, c, a and b, a and c, b and c, or a, b, and c, where a, b, and c may be singular or plural.

In the descriptions of this application, "and/or" describes an association relationship between associated objects, and indicates that three relationships may exist. For example, A and/or B may represent the following cases: Only A exists, both A and B exist, and only B exists, where A and B may be singular or plural. "/" indicates "or". For example, a/b indicates a or b.

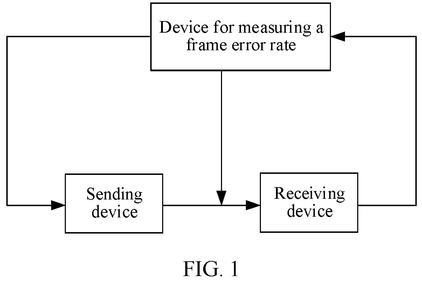

Embodiments of this application may be applied to a scenario in which a receiving device and a sending device measure the frame error rate. For example, FIG. 1 is a diagram of a scenario of measuring a frame error rate to which an embodiment of this application is applicable. In the scenario, a sending device, a receiving device, and a device for measuring a frame error rate may be included. The device for measuring a frame error rate may generate a test frame, so that the sending device sends the test frame to the receiving device. In addition, the device for measuring a frame error rate receives a decoded frame from the receiving device, and determines an error frame based on the test frame and the decoded frame, to determine the frame error rate. The sending device may be a communication device such as a network device or a terminal device, and the receiving device may also be a communication device such as a network device or a terminal device.

The network device is a device having a wireless transceiver function or a chip that can be disposed in the network device. The network device includes but is not limited to an evolved NodeB (evolved NodeB, eNB), a generation NodeB (generation NodeB, gNB), a radio network controller (radio network controller, RNC), a NodeB (NodeB, NB), a base station controller (base station controller, BSC), a base transceiver station (base transceiver station, BTS), a home NodeB (for example, a home evolved NodeB or a home NodeB, HNB), a baseband unit (baseband unit, BBU), an access point (access point, AP) in a wireless fidelity (wireless fidelity, Wi-Fi) system, a wireless relay node, a macro base station, a micro base station (or referred to as a small cell), a wireless backhaul node, a transmission point (transmission and reception point, TRP, or transmission point, TP), a satellite, a high-altitude platform, an uncrewed aerial vehicle, or the like. Alternatively, the network device may be a network node that forms a gNB or a transmission point, for example, a baseband unit (BBU), a distributed unit (distributed unit, DU), or a network device that bears a base station function in a communication system.

The terminal device may also be referred to as user equipment (UE, User Equipment), an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a wireless data card, a personal digital assistant (Personal Digital Assistant, PDA) computer, a Pad (Pad), a computer with a wireless transceiver function, a wireless modem (modem), a handset (handset), a laptop computer (laptop computer), a machine type communication (machine type communication, MTC) terminal, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a smart wearable device (smart glasses, a smart watch, a smart headset, or the like), a wireless terminal in a smart home (smart home), an uncrewed aerial vehicle, or the like. Alternatively, the terminal device may be a chip, a chip module (or a chip system), or the like that can be disposed in the foregoing device. A terminal device having the wireless transceiver function and a chip that can be disposed in the terminal device are collectively referred to as the terminal device in this application.

It should be noted that the device for measuring a frame error rate in FIG. 1 may be a general term of devices for measuring a frame error rate. The device for measuring a frame error rate may be one device (for example, a device that integrates a function of a channel simulation device and a function of a test device), may include two devices (for example, a test device and a channel simulation device), or may include more than two devices. This is not limited in this application. For ease of understanding, the following first explains some technical terms in embodiments of this application.

Frame error rate:

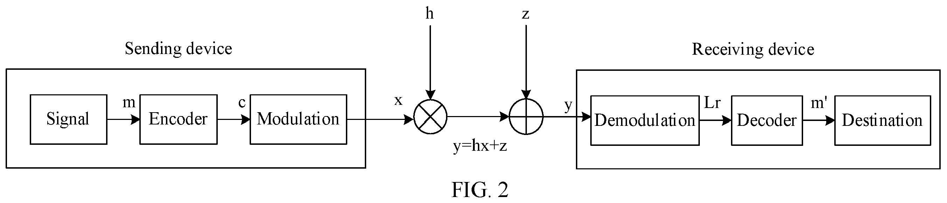

A typical communication link between a sending device and a receiving device may be shown in FIG. 2. x is a transmitted signal sequence, *h* is a channel coefficient, z is white Gaussian noise, *y* is a received signal sequence, and the foregoing parameters satisfy a formula *y=hx+z*. It is assumed that *x*={*xi*} is a series of complex signal sequences obtained by encoding and modulating an original information frame (frame) or information block (block) m, and *y*={*yi*} is a received signal sequence. A signal frame obtained by the receiving device by demodulating and decoding the received signal sequence y is denoted as m'. When m'=m, it is considered that the information frame m is transmitted correctly. On the contrary, when m'≠m, it is considered that the information frame m is transmitted incorrectly. The frame error rate (or referred to as a block error rate) refers to an average probability of transmission errors of information frames or information blocks during data transmission.

Using an additive white Gaussian noise (additive white Gaussian noise, AWGN) channel as an example, the frame error rate may satisfy the following formula 1:

$$P(e) = \int_{z \in cN^n} I(x + z \,|\, x) f(z) dz \qquad \text{Formula 1}$$

$P(e)$ is the frame error rate, $z \in cN^n$ is n-dimensional complex white Gaussian noise, $f(z)$ is a noise joint density function, and $f(z)$ may satisfy the following formula 2:

$$f(z) = \prod_{i=1}^{n} \frac{1}{\sqrt{2\pi}\sigma} e^{-\frac{z_i^2}{2\sigma^2}} \qquad \text{Formula 2}$$

$\sigma$ is noise power, and $z_i$ is white Gaussian noise corresponding to an $i^{th}$ frame. $I()$ represents an error indication function, and $I()$ satisfies the following formula 3:

$$I() = \begin{cases} 1 \ when \ m' \neq m (\text{incorrect frame transmission}) \\ 0 \ when \ m' = m (\text{correct frame transmission}) \end{cases} \qquad \text{Formula 3}$$

In other words, when the frame is transmitted incorrectly, a value of the function $I()$ is 1; or when the frame is transmitted correctly, a value of the function $I()$ is 0.

Currently, before delivery, tests on whether some communication devices satisfy standard indicators need to be performed, to ensure that devices satisfy design requirements specified in industry standards. For example, in a performance test of a communication device, receiver performance is an important technical indicator for measuring performance of the device, and is generally expressed by measuring the frame error rate. Currently, an MC method is usually used for measuring the frame error rate. The MC method is usually based on the law of large numbers, which can ensure that when a total quantity of frames is large enough (generally hundreds of times a reciprocal of the frame error rate), a ratio of a quantity of error frames to the total quantity of frames can approximate an actual value of the frame error rate. For a device that requires the frame error rate to be in an order of magnitude of $10^{-1}$ to $10^{-2}$, the MC method can be used for completing measurement of the frame error rate in short time (for example, 5 minutes). However, for a device that has a high requirement on the frame error rate, for example, a device that requires the frame error rate=$10^{-6}$ to $10^{-8}$, the conventional MC method takes long time. For example, measurement time may be one month or even one year. This reduces measurement efficiency.

In view of this, embodiments of this application provide a method for measuring a frame error rate, to reduce measurement duration and improve the measurement efficiency.

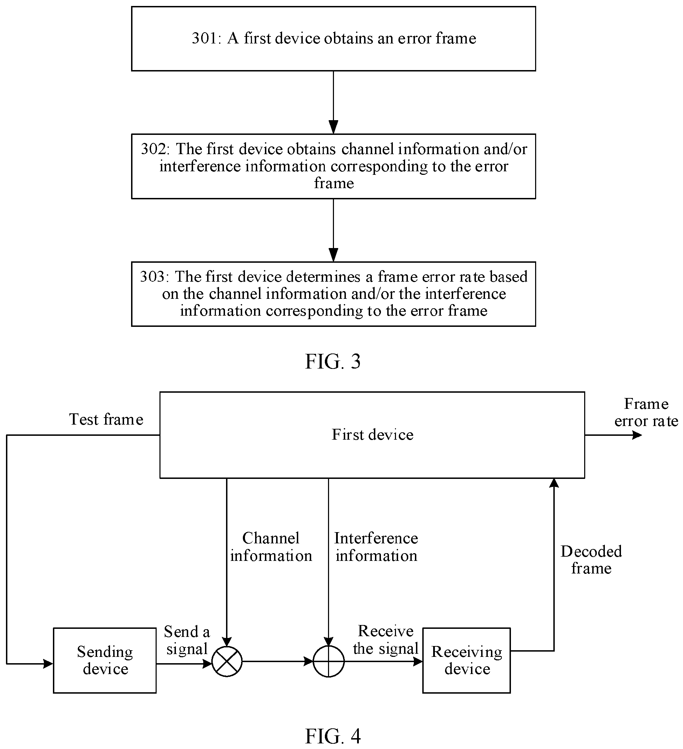

Based on the foregoing descriptions, the following describes in detail the method for measuring a frame error rate provided in embodiments of this application. The method for measuring a frame error rate provided in embodiments of this application may be applied to the scenario shown in FIG. 1. Refer to FIG. 3. A detailed procedure of the method for measuring a frame error rate provided in embodiments of this application may include the following steps.

Step 301: A first device obtains an error frame.

Step 302: The first device obtains channel information and/or interference information corresponding to the error frame.

Step 303: The first device determines a frame error rate based on the channel information and/or the interference information corresponding to the error frame.

The foregoing method for determining the frame error rate based on the channel information and/or the interference information corresponding to the error frame can reduce a quantity of transmitted test frames. For example, a total quantity of frames needs to be only 1% or even less of a total quantity of frames required for a current MC method. In other words, a quantity of test frames used for obtaining an accurate frame error rate needs to be only 1% or even less of the total quantity of frames required for the current MC method. Therefore, measurement duration can be reduced, and measurement efficiency can be improved.

Optionally, the first device may be a test device. Alternatively, the first device may be a device having a test function and a channel simulation function. This may be understood as that the first device is a device integrating the test device and a channel simulation device. It should be understood that the test device and the channel simulation device are merely examples of device names, and are not intended to limit this application. This application is merely described by using the examples. The following separately describes different cases of the first device by using Embodiment a and Embodiment b.

Embodiment a: The first device is the device having the test function and the channel simulation function, for example, a first device in a scenario of measuring a frame error rate shown in FIG. 4. Embodiment a may be understood as that in the scenario shown in FIG. 1, the device for measuring a frame error rate includes one device.

In Embodiment a, the first device may generate channel information and/or interference information corresponding to each frame, may provide a test frame for a sending device, may obtain a decoded frame from a receiving device, and may determine the frame error rate and output the frame error rate.

Optionally, the first device may generate a plurality of pieces of channel information and/or a plurality of pieces of interference information. For example, the first device may determine a channel parameter such as channel power and/or interference noise power, and then generate the plurality of pieces of channel information and/or the plurality of pieces of interference information based on the channel parameter.

Optionally, the interference information in this application may include an interference signal, noise, and the like. The interference signal may be an interference sequence or the like, as shown in FIG. 4. The channel information may be a channel sequence, as shown in FIG. 4.

In an optional implementation, that the first device obtains channel information and/or interference information corresponding to the error frame may be that the first device determines the channel information and/or the interference information corresponding to the error frame from channel information and/or interference information corresponding to all frames generated by the first device.

In an example, that a first device obtains an error frame may be that the first device determines a plurality of test frames, obtains a plurality of decoded frames, and determines the error frame based on the plurality of test frames and the plurality of decoded frames.

Specifically, the first device generates the plurality of test frames, and sends the plurality of test frames (for example, N test frame columns $\{m_1, m_2, ..., m_N\}$, where N is an integer greater than or equal to 2) to the sending device through a test frame interface. The sending device inputs the plurality of test frames into a communication link between the sending device and the receiving device. This may also be understood as that the sending device sends the plurality of test frames to the receiving device. The receiving device receives and decodes the test frames to obtain the plurality of decoded frames (for example, N corresponding decoded frames $\{m_1', m_2', ..., m_N'\}$), and sends the plurality of decoded frames to the first device through a decoded frame interface of the first device. The first device compares the plurality of test frames with the plurality of decoded frames. When an $i^{th}$ test frame does not match an $i^{th}$ decoded frame, an $i^{th}$ frame is determined as an error frame. This may be denoted as that when $m_i \neq m_i'$, the $i^{th}$ frame is the error frame Ii=1; or otherwise, Ii=0. For details, refer to the foregoing formula 3. Based on this, the first device may determine the error frame based on the plurality of test frames and the plurality of decoded frames. For example, there may be one or more error frames.

For details about the communication link for the sending device and the receiving device to perform transmission of the test frame, refer to FIG. 2, and details are not described herein again. In an optional implementation, that the first device may determine the frame error rate based on the channel information and/or the interference information corresponding to the error frame may be that the first device determines a weight of the error frame based on the channel information and/or the interference information corresponding to the error frame, and further, the first device determines the frame error rate based on the weight of the error frame.

For example, a weight that is of the error frame and that is determined by the first device based on the interference information corresponding to the error frame may satisfy the following formula 4:

$$w_i = \frac{e^{-\frac{z_i}{2\sigma_1^2}}\big/\sigma_1^{2n}}{e^{-\frac{z_i}{2\sigma_2^2}}\big/\sigma_2^{2n}} \qquad \text{Formula 4}$$

$w_i$ is a weight of the $i^{th}$ frame, $w_i$ is the weight of the error frame when the $i^{th}$ frame is the error frame, $z_i$ is the interference information corresponding to the $i^{th}$ frame, $\sigma_1$ is real noise power corresponding to a simulated signal-to-noise ratio, $\sigma_2$ is noise power used in an importance sampling method, $\sigma_2$ generally needs to satisfy $\sigma_2 > \sigma_1$, a typical value of $\sigma_2$ is an integer multiple of $\sigma_1$, and n is a quantity of noise dimensions.

Optionally, the frame error rate determined by the first device may satisfy the following formula 5:

$$FER = \sum_{i=1}^{N} I_i w_i \qquad \text{Formula 5}$$

*FER* is the frame error rate; *N* is a quantity of frames, and *N* is a positive integer; *I* is an error indication function, and when the $i^{th}$ frame is the error frame, $I_i$ is 1, or when the $i^{th}$ frame is not the error frame, $I_i$ is 0; and $w_i$ is the weight of the $i^{th}$ frame, and $w_i$ is determined based on channel information and/or the interference information corresponding to the $i^{th}$ frame.

It should be noted that, when the $i^{th}$ frame is a correct frame, that is, when the $i^{th}$ frame is not the error frame, $I_i$ in Formula 5 is 0. Therefore, it may be understood as that the frame error rate is determined based on the weight of the error frame.

For example, in Embodiment a, the first device may implement the foregoing operations by using one module in the first device, or may implement the foregoing operations by using two modules in the first device.

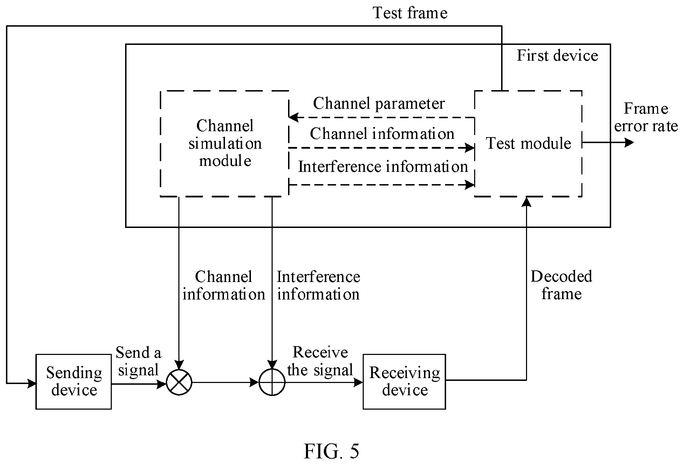

In an optional implementation, when the two modules in the first device are used for implementation, the two modules may be shown as a channel simulation module and a test module in FIG. 5. It should be understood that the two modules in FIG. 5 are merely an example, and are not intended to limit this application. The following uses only the channel simulation module and the test module as an example for description.

Optionally, in a scenario shown in FIG. 5, the test module may provide a test frame for a sending device, obtain a decoded frame from a receiving device, and determine a frame error rate and output the frame error rate. The test module may determine a channel parameter such as channel power and/or interference noise power, and transmit the channel parameter to the channel simulation module. The channel simulation module may generate a plurality of pieces of channel information and/or a plurality of pieces of interference information based on the channel parameter. Alternatively, optionally, the test module may generate a plurality of pieces of channel information and/or a plurality of pieces of interference information based on a channel parameter, and transmit the plurality of pieces of channel information and/or the plurality of pieces of interference information to the channel simulation module.

The test module may obtain channel information and/or interference information corresponding to an error frame. For example, the test module obtains channel information and/or interference information corresponding to all frames from the channel simulation module, and determines the channel information and/or the interference information corresponding to the error frame from the channel information and/or the interference information corresponding to all the frames. For another example, after determining the error frame, the test module transmits a frame identifier of the error frame to the channel simulation module, and the channel simulation module determines, based on the frame identifier of the error frame, the channel information and/or the interference information corresponding to the error frame, and transmits the channel information and/or the interference information corresponding to the error frame to the test module.

Optionally, when transmitting the channel information and/or the interference information corresponding to the error frame to the test module, the channel simulation module may further transmit the frame identifier of the error frame to the test module, so that the test module identifies the channel information and/or the interference information separately corresponding to the error frame.

It should be understood that interaction between the test module and the channel simulation module is implemented inside the first device.

Optionally, when the foregoing operations of the first device are implemented by using one module, for example, the module may be a module integrating the test module and the channel simulation module, or another module implementing a function of the first device. It should be understood that, when the module is the module integrating the test module and the channel simulation module, the foregoing operations of the interaction between the test device and the channel simulation module do not exist.

According to the foregoing Embodiment a, one device can generate the channel information and/or the interference information and measure the frame error rate, so that efficiency of measuring the frame error rate can be improved, and deployment of measurement devices can be reduced.

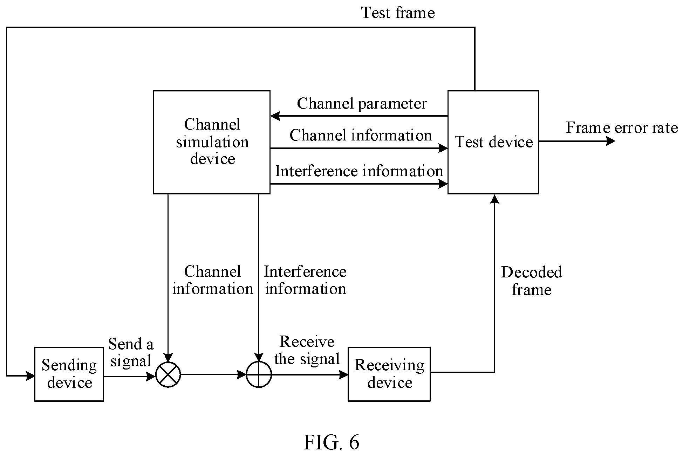

Embodiment b: The first device is the test device, for example, a test device shown in FIG. 6. Embodiment b may be understood as that in the scenario shown in FIG. 1, the device for measuring a frame error rate includes two devices: a first device and a second device. The second device is described by using a channel simulation device as an example in this application, and is not intended to limit this application.

In Embodiment b, the test device may provide a test frame for a sending device, obtain a decoded frame from a receiving device, and determine the frame error rate and output the frame error rate. The channel simulation device may generate channel information and/or interference information, or the test device may generate channel information and/or interference information, and send the channel information and/or the interference information to the channel simulation device.

Optionally, the test device may determine a channel parameter such as channel power and/or interference noise power, and send the channel parameter to the channel simulation device, so that the channel simulation device generates a plurality of pieces of channel information and/or a plurality of pieces of interference information based on the channel parameter. Alternatively, optionally, the test device may determine a channel parameter such as channel power and/or interference noise power, generate a plurality of pieces of channel information and/or a plurality of pieces of interference information based on the channel parameter, and send the plurality of pieces of channel information and/or the plurality of pieces of interference information to the channel simulation device.

In Embodiment b, for a method for obtaining an error frame by the test device, refer to the method for obtaining the error frame by the first device in Embodiment a, and for a method for determining the frame error rate by the test device based on channel information and/or interference information corresponding to the error frame, refer to the method for determining the frame error rate based on the channel information and/or the interference information corresponding to the error frame in Embodiment a. Details are not described herein again.

In an optional manner c1, the test device may obtain the channel information and/or the interference information corresponding to the error frame in the following manner: The test device receives channel information and/or interference information corresponding to all frames from the channel simulation device, and determines the channel information and/or the interference information corresponding to the error frame from the channel information and/or the interference information corresponding to all the frames. Correspondingly, the channel simulation device determines the channel information and/or the interference information corresponding to all the frames, and sends the channel information and/or the interference information corresponding to all the frames to the test device.

For example, the test device may receive the channel information corresponding to all the frames from the channel simulation device through a first interface, and/or receive the interference information corresponding to all the frames from the channel simulation device through a second interface.

Optionally, the first interface and the second interface may be a same interface, or may be two different interfaces.

In an example, when the test device receives the channel information and/or the interference information corresponding to all the frames from the channel simulation device, the test device may further receive frame identifiers corresponding to all the frames from the channel simulation device, and a frame identifier of each frame corresponds to channel information and/or interference information of each frame, so that the test device determines a correspondence between the error frame and the channel information and/or the interference information of the error frame.

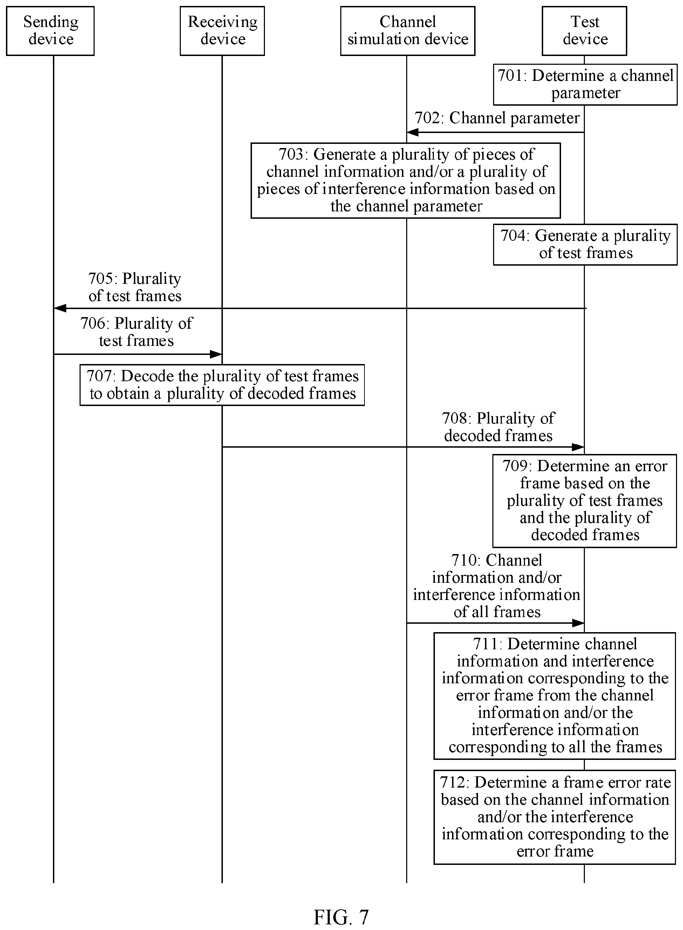

Based on the manner c1, an example of a method for measuring a frame error rate may be shown in FIG. 7, and a procedure may be as follows.

Step 701: A test device determines a channel parameter, where the channel parameter may include channel power, interference noise power, and/or the like.

Step 702: The test device sends the channel parameter to a channel simulation device.

Step 703: The channel simulation device generates a plurality of pieces of channel information and/or a plurality of pieces of interference information based on the channel parameter.

The plurality of pieces of channel information and/or the plurality of pieces of interference information are/is used for a communication link between a sending device and a receiving device. Step 704: The test device generates a plurality of test frames.

Step 705: The test device sends the plurality of test frames to the sending device.

Step 706: The sending device transmits the plurality of test frames to the receiving device.

Step 707: The receiving device decodes the plurality of test frames to obtain a plurality of decoded frames.

Step 708: The receiving device sends the plurality of decoded frames to the test device.

Step 709: The test device determines an error frame based on the plurality of test frames and the plurality of decoded frames.

Step 710: The channel simulation device sends channel information and/or interference information of all frames to the test device.

Step 711: The test device determines channel information and/or interference information corresponding to the error frame from the channel information and/or the interference information corresponding to all the frames.

Step 712: The test device determines a frame error rate based on the channel information and/or the interference information corresponding to the error frame.

Specifically, for a specific implementation method of each step in the foregoing example, refer to the foregoing related descriptions. Details are not described herein again.

In an optional manner c2, the test device may obtain the channel information and/or the interference information corresponding to the error frame in the following manner: The test device sends a frame identifier of the error frame to the channel simulation device, where the frame identifier of the error frame is used for determining the channel information and/or the interference information corresponding to the error frame; and the test device receives the channel information and/or the interference information corresponding to the error frame from the channel simulation device. Correspondingly, the channel simulation device receives the frame identifier of the error frame from the test device, determines the channel information and/or the interference information corresponding to the error frame based on the frame identifier of the error frame, and sends the channel information and/or the interference information corresponding to the error frame to the test device.

For example, the test device may send the frame identifier of the error frame to the channel simulation device through a third interface; and the test device may receive the channel information corresponding to the error frame from the channel simulation device through a fourth interface, and/or receive the interference information corresponding to the error frame from the channel simulation device through a fifth interface.

Optionally, the fourth interface and the fifth interface may be a same interface, or may be two different interfaces.

Optionally, the third interface, the fourth interface, and the fifth interface may be implemented through a same interface. For example, when the test device sends information to the channel simulation device, the interface may be represented as a function of the third interface, and may be understood as a downlink interface; and when the test device receives information from the channel simulation device, the interface may be represented as a function of the fourth interface and a function of the fifth interface, and may be understood as an uplink interface.

In an example, when the test device receives the channel information and/or the interference information corresponding to the error frame from the channel simulation device, the test device may further receive the frame identifier of the error frame from the channel simulation device, and a frame identifier of each error frame corresponds to channel information and/or interference information of each error frame, so that the test device determines a correspondence between the error frame and the channel information and/or the interference information of the error frame.

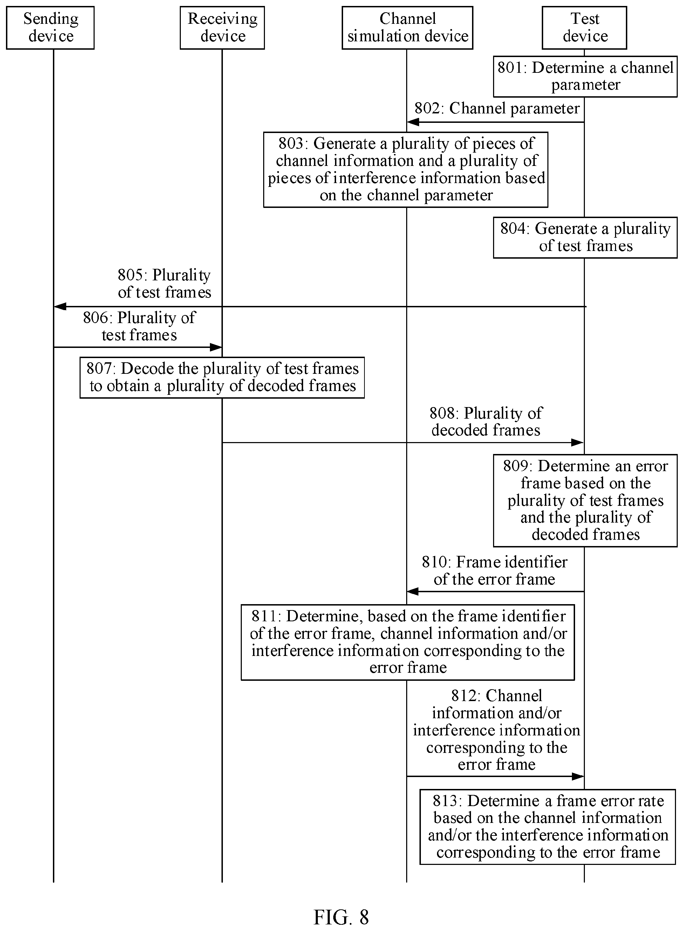

Based on the manner c2, an example of a method for measuring a frame error rate may be shown in FIG. 8, and a procedure may be as follows.

Step 801 to step 809 are similar to step 701 to step 709, and mutual reference may be made to these steps. Details are not described herein again.

Step 810: A test device sends a frame identifier of an error frame to a channel simulation device. Step 811: The channel simulation device determines, based on the frame identifier of the error frame, channel information and/or interference information corresponding to the error frame.

Step 812: The channel simulation device sends the channel information and/or the interference information corresponding to the error frame to the test device.

Step 813: The test device determines a frame error rate based on the channel information and/or the interference information corresponding to the error frame.

Specifically, for a specific implementation method of each step in the foregoing example, refer to the foregoing related descriptions. Details are not described herein again.

Based on the foregoing manner c2, a data throughput between the channel simulation device and the test device can be reduced.

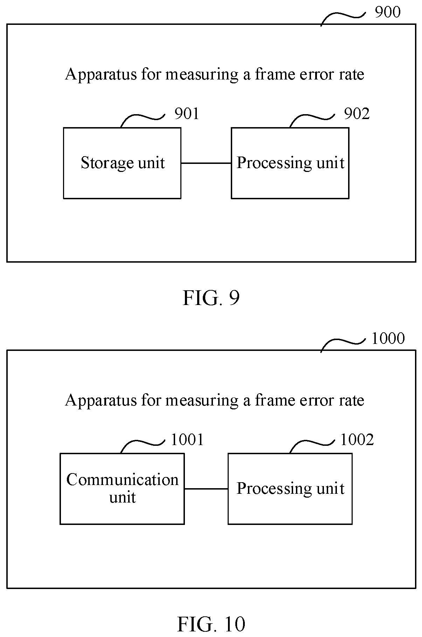

Based on the foregoing embodiments, an embodiment of this application further provides an apparatus for measuring a frame error rate. Refer to FIG. 9. The apparatus 900 for measuring a frame error rate may include a storage unit 901 and a processing unit 902. The storage unit 901 is configured to store program instructions, and the processing unit 902 is configured to invoke the program instructions in the storage unit 901 to control and manage an action of the apparatus 900 for measuring a frame error rate.

For example, the apparatus 900 for measuring a frame error rate may be the first device, a processor, a chip, a chip system, or a function module of the first device, or the like in the foregoing embodiments.

In an embodiment, when the apparatus 900 for measuring a frame error rate is configured to implement a function of the first device in the foregoing embodiments, the apparatus 900 for measuring a frame error rate may include: The processing unit 902 is configured to invoke the program instructions in the storage unit 901 to perform the following operations: obtaining an error frame, and obtaining channel information and/or interference information corresponding to the error frame; and determining the frame error rate based on the channel information and/or the interference information corresponding to the error frame.

In an optional implementation, when obtaining the channel information and/or the interference information corresponding to the error frame, the processing unit 902 may be configured to determine the channel information and/or the interference information corresponding to the error frame from channel information and/or interference information corresponding to all frames generated by the first device.

In another optional implementation, the apparatus 900 for measuring a frame error rate may further include a communication unit. The communication unit is configured to receive channel information and/or interference information corresponding to all frames from a second device. When obtaining the channel information and/or the interference information corresponding to the error frame, the processing unit 902 may be configured to determine the channel information and/or the interference information corresponding to the error frame from the channel information and/or the interference information corresponding to all the frames.

In still another optional implementation, the apparatus 900 for measuring a frame error rate may further include a communication unit. The communication unit is configured to: send a frame identifier of the error frame to a second device, where the frame identifier of the error frame is used for determining the channel information and/or the interference information corresponding to the error frame; and receive the channel information and/or the interference information corresponding to the error frame from the second device. When obtaining the channel information and/or the interference information corresponding to the error frame, the processing unit 902 may be configured to control the communication unit to perform the foregoing receiving and sending operations.

In an example, when the communication unit is configured to receive the channel information and/or the interference information corresponding to all the frames from the second device, the communication unit may be configured to: receive the channel information corresponding to all the frames from the second device through a first interface, and/or receive the interference information corresponding to all the frames from the second device through a second interface.

Alternatively,
when the communication unit is configured to send the frame identifier of the error frame to the second device, the communication unit may be configured to send the frame identifier of the error frame to the second device through a third interface.

When the communication unit is configured to receive the channel information and/or the interference information corresponding to the error frame from the second device, the communication unit may be configured to: receive the channel information corresponding to the error frame from the second device through a fourth interface, and/or receive the interference information corresponding to the error frame from the second device through a fifth interface. Optionally, when the communication unit is configured to receive the channel information and/or the interference information corresponding to all the frames from the second device, the communication unit is further configured to receive frame identifiers corresponding to all the frames from the second device, where a frame identifier of each frame corresponds to channel information and/or interference information of each frame.

Alternatively, when the communication unit is configured to receive the channel information and/or the interference information corresponding to the error frame from the second device, the communication unit is further configured to: receive, for the first device, the frame identifier of the error frame from the second device, where a frame identifier of each error frame corresponds to channel information and/or interference information of each error frame.

For example, the processing unit 902 is further configured to determine a plurality of pieces of channel information and/or a plurality of pieces of interference information.

Optionally, the apparatus 900 for measuring a frame error rate may further include a communication unit, and the communication unit is configured to send the plurality of pieces of channel information and/or the plurality of pieces of interference information to the second device. In an optional manner, when determining the frame error rate based on the channel information and/or the interference information corresponding to the error frame, the processing unit 902 is configured to: determine a weight of the error frame based on the channel information and/or the interference information corresponding to the error frame; and determine the frame error rate based on the weight of the error frame.

For example, the frame error rate satisfies the following formula:

$$FER = \sum_{i=1}^{N} I_i w_i$$

*FER* is the frame error rate; $N$ is a quantity of frames, and $N$ is a positive integer; $I$ is an error indication function, and when an $i^{th}$ frame is an error frame, $I_i$ is 1, or otherwise, $I_i$ is 0; and $w_i$ is a weight of the $i^{th}$ frame, and $w_i$ is determined based on channel information and/or interference information corresponding to the $i^{th}$ frame.

Optionally, when obtaining the error frame, the processing unit 902 may be configured to: determine a plurality of test frames; obtain a plurality of decoded frames; and determine the error frame based on the plurality of test frames and the plurality of decoded frames.

Based on the foregoing embodiments, an embodiment of this application further provides another apparatus for measuring a frame error rate. Refer to FIG. 10. The apparatus 1000 for measuring a frame error rate may include a communication unit 1001 and a processing unit 1002. The communication unit 1001 is configured to communicate with another device, and the processing unit 1002 is configured to control and manage an action of the apparatus 1000 for measuring a frame error rate. The processing unit 1002 may further control a step performed by the communication unit 1001.

For example, the apparatus 1000 for measuring a frame error rate may be the second device, a processor, a chip, a chip system, or a function module of the second device, or the like in the foregoing embodiments.

In an embodiment, when the apparatus 1000 for measuring a frame error rate is configured to implement a function of the second device in the foregoing embodiments, the apparatus 1000 for measuring a frame error rate may include: The processing unit 1002 is configured to determine channel information and/or interference information corresponding to all frames; and the communication unit 1001 is configured to send the channel information and/or the interference information corresponding to all the frames to a first device.

Optionally, when sending the channel information and/or the interference information corresponding to all the frames to the first device, the communication unit 1001 may be configured to: send the channel information corresponding to all the frames to the first device through a first interface, and/or send the interference information corresponding to all the frames to the first device through a second interface.

For example, when sending the channel information and/or the interference information corresponding to all the frames to the first device, the communication unit 1001 is further configured to send frame identifiers corresponding to all the frames to the first device, where a frame identifier of each frame corresponds to channel information and/or interference information of each frame.

In another embodiment, when the apparatus 1000 for measuring a frame error rate is configured to implement a function of the second device in the foregoing embodiments, the apparatus 1000 for measuring a frame error rate may include: The communication unit 1001 is configured to receive a frame identifier of an error frame from a first device, where the frame identifier of the error frame is used for determining channel information and/or interference information corresponding to the error frame; the processing unit 1002 is configured to determine, based on the frame identifier of the error frame, the channel information and/or the interference information corresponding to the error frame; and the communication unit 1001 is further configured to send the channel information and/or the interference information corresponding to the error frame to the first device.

Optionally, when receiving the frame identifier of the error frame from the first device, the communication unit 1001 may be configured to receive the frame identifier of the error frame from the first device through a third interface.

Optionally, when sending the channel information and/or the interference information corresponding to the error frame to the first device, the communication unit 1001 may be configured to: send the channel information corresponding to the error frame to the first device through a fourth interface, and/or send the interference information corresponding to the error frame to the first device through a fifth interface.

For example, when sending the channel information and/or the interference information corresponding to the error frame to the first device, the communication unit 1001 may be further configured to send the frame identifier of the error frame to the first device, where a frame identifier of each error frame corresponds to channel information and/or interference information of each error frame.

It should be noted that, in embodiments of this application, division into the units is an example, and is merely a logical function division. In actual implementation, another division manner may be used. Functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in a form of a software product. The computer software product is stored in a storage medium and includes several instructions for instructing a computer device (which may be a personal computer, a server, a network device, or the like) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

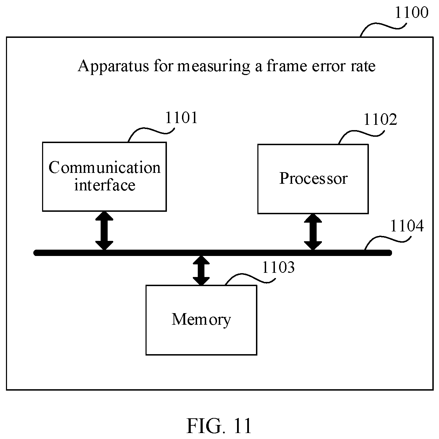

Based on the foregoing embodiments, an embodiment of this application further provides an apparatus for measuring a frame error rate. Refer to FIG. 11. The apparatus 1100 for measuring a frame error rate may include a communication interface 1101 and a processor 1102. Optionally, the apparatus 1100 for measuring a frame error rate may further include a memory 1103. The memory 1103 may be disposed inside the apparatus 1100 for measuring a frame error rate, or may be disposed outside the apparatus 1100 for measuring a frame error rate. The processor 1102 may control the communication interface 1101 to receive and send information or data, for example, a frame. The processor 1102 and the memory 1103 may alternatively be integrated together.

The processor 1102 may be a central processing unit (central processing unit, CPU), a network processor (network processor, NP), or a combination of the CPU and the NP. The processor 1102 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable logic gate array, FPGA), a generic array logic (generic array logic, GAL), or any combination thereof.

The communication interface 1101, the processor 1102, and the memory 1103 are connected to each other. Optionally, the communication interface 1101, the processor 1102, and the memory 1103 are connected to each other through a bus 1104. The bus 1104 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one bold line is used to represent the bus in FIG. 11, but this does not mean that there is only one bus or only one type of bus.

In an optional implementation, the memory 1103 is configured to store a program, or the like. The program may include program code, and the program code includes computer operating instructions. The memory 1103 may include a RAM, and may further include a non-volatile memory (non-volatile memory), for example, one or more magnetic disk memories. The processor 1102 executes an application program stored in the memory 1103 to implement the foregoing functions, so that a function of the apparatus 1100 for measuring a frame error rate is implemented. For example, the apparatus 1100 for measuring a frame error rate may be the first device in the foregoing embodiments, or may be the second device (for example, the channel simulation device) in the foregoing embodiments.

In an embodiment, when the apparatus 1100 for measuring a frame error rate performs a function of the first device in the foregoing embodiments, the communication interface 1101 may implement receiving and sending operations performed by the first device in the foregoing embodiments; and the processor 1102 may implement another operation other than the receiving and sending operations performed by the first device in the foregoing embodiments. For related detailed descriptions, refer to the related descriptions in the foregoing embodiments. Details are not described herein again.

In another embodiment, when the apparatus 1100 for measuring a frame error rate performs a function of the second device (for example, the channel simulation device) in the foregoing embodiments, the communication interface 1101 may implement receiving and sending operations performed by the second device (for example, the channel simulation device) in the foregoing embodiments; and the processor 1102 may implement another operation other than the receiving and sending operations performed by the second device (for example, the channel simulation device) in the foregoing embodiments. For related detailed descriptions, refer to related descriptions in the foregoing embodiments. Details are not described herein again.

Based on the foregoing embodiments, an embodiment of this application provides a system. The system may include the first device in the foregoing embodiments, or include the first device and the second device in the foregoing embodiments.

An embodiment of this application further provides a computer-readable storage medium. The computer-readable storage medium is configured to store a computer program. When the computer program is executed by a computer, the computer may implement the method for measuring a frame error rate provided in the foregoing method embodiments.

An embodiment of this application further provides a computer program product. The computer program product is configured to store a computer program. When the computer program is executed by a computer, the computer may implement the method for measuring a frame error rate provided in the foregoing method embodiments.

An embodiment of this application further provides a chip, including a processor. The processor is coupled to a memory, and is configured to invoke a program in the memory, so that the chip implements the method for measuring a frame error rate provided in the foregoing method embodiments.

An embodiment of this application further provides a chip. The chip is coupled to a memory, and the chip is configured to implement the method for measuring a frame error rate provided in the foregoing method embodiments. Alternatively, the memory may be integrated into the chip.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. The computer program instructions may be provided for a general-purpose computer, a dedicated computer, an embedded processor, or a processor of another programmable data processing device to generate a machine, so that the instructions executed by a computer or the processor of the another programmable data processing device generate an apparatus for implementing a specific function in one or more procedures in the flowcharts and/or in one or more blocks in the block diagrams.

The computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the protection scope of this application. This application is intended to cover these modifications and variations of this application provided that they fall within the scope of protection defined by the following claims of this application and their equivalent technologies.

**Claims**

1. A method for measuring a frame error rate, comprising:

   obtaining, by a first device, an error frame;
   obtaining, by the first device, channel information and/or interference information corresponding to the error frame; and
   determining, by the first device, a frame error rate based on the channel information and/or the interference information corresponding to the error frame.

2. The method according to claim 1, wherein the obtaining, by the first device, channel information and/or interference information corresponding to the error frame comprises:

   determining, by the first device, the channel information and/or the interference information corresponding to the error frame from channel information and/or interference information corresponding to all frames generated by the first device;
   receiving, by the first device, channel information and/or interference information corresponding to all frames from a second device, and determining the channel information and/or the interference information corresponding to the error frame from the channel information and/or the interference information corresponding to all the frames; or
   sending, by the first device, a frame identifier of the error frame to a second device, wherein the frame identifier of the error frame is used for determining the channel information and/or the interference information corresponding to the error frame; and receiving, by the first device, the channel information and/or the interference information corresponding to the error frame from the second device.

3. The method according to claim 2, wherein
   the receiving, by the first device, channel information and/or interference information corresponding to all frames from a second device comprises:

   receiving, by the first device, the channel information corresponding to all the frames from the second device through a first interface, and/or receiving the interference information corresponding to all the frames from the second device through a second interface;
   or
   the sending, by the first device, a frame identifier of the error frame to a second device comprises:

      sending, by the first device, the frame identifier of the error frame to the second device through a third interface; and
      the receiving, by the first device, the channel information and/or the interference information corresponding to the error frame from the second device comprises:
      receiving, by the first device, the channel information corresponding to the error frame from the second device through a fourth interface, and/or receiving the interference information corresponding to the error frame from the second device through a fifth interface.

4. The method according to claim 2 or 3, wherein

   when the first device receives the channel information and/or the interference information corresponding to all the frames from the second device, the method further comprises: receiving, by the first device, frame identifiers corresponding to all the frames from the second device, wherein a frame identifier of each frame corresponds to channel information and/or interference information of each frame; or
   when the first device receives the channel information and/or the interference information corresponding to the error frame from the second device, the method further comprises: receiving, by the first device, the frame identifier of the error frame from the second device, wherein a frame identifier of each error frame corresponds to channel information and/or interference information of each error frame.

5. The method according to any one of claims 1 to 4, wherein the method further comprises:
   determining, by the first device, a plurality of pieces of channel information and/or a plurality of pieces of interference information.

6. The method according to claim 5, wherein the method further comprises:
sending, by the first device, the plurality of pieces of channel information and/or the plurality of pieces of interference information to the second device.

7. The method according to any one of claims 1 to 6, wherein the determining, by the first device, a frame error rate based on the channel information and/or the interference information corresponding to the error frame comprises:

determining, by the first device, a weight of the error frame based on the channel information and/or the interference information corresponding to the error frame; and
determining, by the first device, the frame error rate based on the weight of the error frame.

8. The method according to any one of claims 1 to 7, wherein the frame error rate satisfies the following formula:

$$FER = \sum_{i=1}^{N} I_i w_i$$
,

wherein
$FER$ is the frame error rate; $N$ is a quantity of frames, and $N$ is a positive integer; $I$ is an error indication function, and when an $i^{th}$ frame is an error frame, $I_i$ is 1, or otherwise, $I_i$ is 0; and $w_i$ is a weight of the $i^{th}$ frame, and $w_i$ is determined based on channel information and/or interference information corresponding to the $i^{th}$ frame.

9. The method according to any one of claims 1 to 8, wherein the obtaining, by a first device, an error frame comprises:

determining, by the first device, a plurality of test frames;
obtaining, by the first device, a plurality of decoded frames; and
determining, by the first device, the error frame based on the plurality of test frames and the plurality of decoded frames.

10. A method for measuring a frame error rate, comprising:

determining, by a second device, channel information and/or interference information corresponding to all frames; and
sending, by the second device, the channel information and/or the interference information corresponding to all the frames to a first device.

11. The method according to claim 10, wherein the sending, by the second device, the channel information and/or the interference information corresponding to all the frames to a first device comprises:
sending, by the second device, the channel information corresponding to all the frames to the first device through a first interface, and/or sending the interference information corresponding to all the frames to the first device through a second interface.

12. The method according to claim 10 or 11, wherein when the second device sends the channel information and/or the interference information corresponding to all the frames to the first device, the method further comprises:
sending, by the second device, frame identifiers corresponding to all the frames to the first device, wherein a frame identifier of each frame corresponds to channel information and/or interference information of each frame.

13. A method for measuring a frame error rate, comprising:

receiving, by a second device, a frame identifier of an error frame from a first device, wherein the frame identifier of the error frame is used for determining channel information and/or interference information corresponding to the error frame;
determining, by the second device based on the frame identifier of the error frame, the channel information and/or the interference information corresponding to the error frame; and
sending, by the second device, the channel information and/or the interference information corresponding to the error frame to the first device.

14. The method according to claim 13, wherein the receiving, by a second device, a frame identifier of an error frame from a first device comprises:
receiving, by the second device, the frame identifier of the error frame from the first device through a third interface.

15. The method according to claim 13 or 14, wherein the sending, by the second device, the channel information and/or the interference information corresponding to the error frame to the first device comprises:
sending, by the second device, the channel information corresponding to the error frame to the first device through a fourth interface, and/or sending the interference information corresponding to the error frame to the first device through a fifth interface.

16. The method according to any one of claims 13 to 15, wherein when the second device sends the channel information and/or the interference information corresponding to the error frame to the first device, the method further comprises:
sending, by the second device, the frame identifier of the error frame to the first device, wherein a frame identifier of each error frame corresponds to channel information and/or interference information of each error frame.

17. An apparatus for measuring a frame error rate, comprising a module or a unit configured to perform the method according to any one of claims 1 to 9.

18. An apparatus for measuring a frame error rate, comprising a module or a unit configured to perform the method according to any one of claims 10 to 12.

19. An apparatus for measuring a frame error rate, comprising a module or a unit configured to perform the method according to any one of claims 13 to 16.

20. An apparatus for measuring a frame error rate, comprising a memory and a processor, wherein

the memory is configured to store computer instructions; and
the processor is coupled to the memory, and is configured to invoke the computer instructions in the memory, to enable the apparatus for measuring a frame error rate to perform the method according to any one of claims 1 to 9.

21. An apparatus for measuring a frame error rate, comprising a memory and a processor, wherein

the memory is configured to store computer instructions; and
the processor is coupled to the memory, and is configured to invoke the computer instructions in the memory, to enable the apparatus for measuring a frame error rate to perform the method according to any one of claims 10 to 12.

22. An apparatus for measuring a frame error rate, comprising a memory and a processor, wherein

the memory is configured to store computer instructions; and
the processor is coupled to the memory, and is configured to invoke the computer instructions in the memory, to enable the apparatus for measuring a frame error rate to perform the method according to any one of claims 13 to 16.

23. The apparatus according to any one of claims 17 to 22, wherein the apparatus is a chip.

24. A system for measuring a frame error rate, comprising a first device, or comprising a first device and a second device, wherein

the first device is configured to perform the method according to any one of claims 1 to 9; and
the second device is configured to perform the method according to any one of claims 10 to 12 or the method according to any one of claims 13 to 16.

25. A computer-readable storage medium, wherein the computer-readable storage medium stores computer-executable instructions, and when the computer-executable instructions are invoked by a computer, the computer is enabled to perform the method according to any one of claims 1 to 9, the method according to any one of claims 10 to 12, or the method according to any one of claims 13 to 16.

**26.** A computer program product comprising instructions, wherein when the computer program product runs on a computer, the computer is enabled to perform the method according to any one of claims 1 to 9, the method according to any one of claims 10 to 12, or the method according to any one of claims 13 to 16.

FIG. 1

FIG. 2

301: A first device obtains an error frame

302: The first device obtains channel information and/or interference information corresponding to the error frame

303: The first device determines a frame error rate based on the channel information and/or the interference information corresponding to the error frame

FIG. 3

Test frame

First device

Frame error rate

Channel information

Interference information

Decoded frame

Sending device

Send a signal

⊗

⊕

Receive the signal

Receiving device

FIG. 4

FIG. 5

FIG. 6

| Sending device | Receiving device | Channel simulation device | Test device |
|---|---|---|---|

701: Determine a channel parameter

702: Channel parameter

703: Generate a plurality of pieces of channel information and/or a plurality of pieces of interference information based on the channel parameter

704: Generate a plurality of test frames

705: Plurality of test frames

706: Plurality of test frames

707: Decode the plurality of test frames to obtain a plurality of decoded frames

708: Plurality of decoded frames

709: Determine an error frame based on the plurality of test frames and the plurality of decoded frames

710: Channel information and/or interference information of all frames

711: Determine channel information and interference information corresponding to the error frame from the channel information and/or the interference information corresponding to all the frames

712: Determine a frame error rate based on the channel information and/or the interference information corresponding to the error frame

FIG. 7

| Sending device | Receiving device | Channel simulation device | Test device |
|---|---|---|---|

801: Determine a channel parameter

802: Channel parameter

803: Generate a plurality of pieces of channel information and a plurality of pieces of interference information based on the channel parameter

804: Generate a plurality of test frames

805: Plurality of test frames

806: Plurality of test frames

807: Decode the plurality of test frames to obtain a plurality of decoded frames

808: Plurality of decoded frames

809: Determine an error frame based on the plurality of test frames and the plurality of decoded frames

810: Frame identifier of the error frame

811: Determine, based on the frame identifier of the error frame, channel information and/or interference information corresponding to the error frame

812: Channel information and/or interference information corresponding to the error frame

813: Determine a frame error rate based on the channel information and/or the interference information corresponding to the error frame

FIG. 8

900

Apparatus for measuring a frame error rate

901

Storage unit

902

Processing unit

FIG. 9

1000

Apparatus for measuring a frame error rate

1001

Communication unit

1002

Processing unit

FIG. 10

1100

Apparatus for measuring a frame error rate

1101

Communication
interface

1102

Processor

1104

1103

Memory

FIG. 11

## INTERNATIONAL SEARCH REPORT

| International application No. |
|---|
| **PCT/CN2022/133574** |

### A. CLASSIFICATION OF SUBJECT MATTER

H04L 27/00(2006.01)i

According to International Patent Classification (IPC) or to both national classification and IPC

### B. FIELDS SEARCHED

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

CNTXT; CNKI; WPABS; ENTXT; 3GPP: 错误帧, 信道信息, 干扰信息, 误帧率, 误码率, 减少, 数量, 总数, 效率, 测量, error frames, channel information, interference information, frame error rate, bit error rate, reduce, number, total, efficiency, measure

### C. DOCUMENTS CONSIDERED TO BE RELEVANT

| Category* | Citation of document, with indication, where appropriate, of the relevant passages | Relevant to claim No. |
|---|---|---|
| X | CN 106416092 A (HUAWEI TECHNOLOGIES CO., LTD.) 15 February 2017 (2017-02-15) claims 1-2 | 10-12, 18, 21, 25-26 |
| A | CN 114586300 A (HUAWEI TECHNOLOGIES CO., LTD.) 03 June 2022 (2022-06-03) entire document | 1-26 |
| A | CN 1427603 A (JIASHENG LIANQIAO INFORMATION ENGINEERING TECHNOLOGY CO., LTD., BEIJING) 02 July 2003 (2003-07-02) entire document | 1-26 |
| A | JP 2001197042 A (SONY CORP.) 19 July 2001 (2001-07-19) entire document | 1-26 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 March 2023** | **27 March 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/133574**

| Patent document cited in search report | | | Publication date (day/month/year) | Patent family member(s) | | | Publication date (day/month/year) |
|---|---|---|---|---|---|---|---|
| CN | 106416092 | A | 15 February 2017 | EP | 3193461 | A1 | 19 July 2017 |
| | | | | EP | 3193461 | A4 | 27 September 2017 |
| | | | | EP | 3193461 | B1 | 18 September 2019 |
| | | | | WO | 2016049815 | A1 | 07 April 2016 |
| | | | | US | 2017223716 | A1 | 03 August 2017 |
| CN | 114586300 | A | 03 June 2022 | None | | | |
| CN | 1427603 | A | 02 July 2003 | None | | | |
| JP | 2001197042 | A | 19 July 2001 | None | | | |

Form PCT/ISA/210 (patent family annex) (July 2022)